**Europäisches Patentamt**

**European Patent Office**

**Office européen des brevets**

(19)

(11) Veröffentlichungsnummer : **0 017 752**
**B1**

(12) **EUROPÄISCHE PATENTSCHRIFT**

(45) Veröffentlichungstag der Patentschrift :
03.11.82

(21) Anmeldenummer : 80101216.2

(22) Anmeldetag : 10.03.80

(51) Int. Cl.³ : **G 03 C 5/04**, G 01 P 13/00

(54) **Verfahren zum Sichtbarmachen von stationären Wärmeübergangskoeffizientenfeldern auf photochemischem Wege.**

(30) Priorität : 26.03.79 DE 2911821

(43) Veröffentlichungstag der Anmeldung :
29.10.80 (Patentblatt 80/22)

(45) Bekanntmachung des Hinweises auf die Patenterteilung : 03.11.82 Patentblatt 82/44

(84) Benannte Vertragsstaaten :
AT CH DE FR GB NL SE

(56) Entgegenhaltungen :
FR A 2 145 310

(73) Patentinhaber : **SIEMENS AKTIENGESELLSCHAFT**
**Berlin und München**
**Postfach 22 02 61**
**D-8000 München 22 (DE)**

(72) Erfinder : **Opitz, Heinrich, Dipl.-Chem.**
**Breslauer Strasse 1**
**D-8520 Erlangen (DE)**
Erfinder : **Montag, Bernhard**
**Nordring 22**
**D-8550 Forchheim (DE)**

# Verfahren zum Sichtbarmachen von stationären Wärmeübergangskoeffizientenfeldern auf photochemischem Wege

Die Erfindung betrifft ein Verfahren zum Sichtbarmachen von stationären Wärmeübergangskoeffizientenfeldern, bei dem auf die Oberfläche eines zu untersuchenden Gegenstandes ein angequollener photographischer Film aufgebracht, mit einem Gas beströmt und wieder abgezogen wird, wonach mit einem photographischen Entwickler ein Photogramm entwickelt wird.

Verfahren zum Sichtbarmachen von stationären Wärmeübergangszonen beruhend auf der Analogie zwischen Stoff- und Wärmeübergang sind bekannt. Es wird nach dem sogenannten Äquidensiten-Verfahren mit Agfa-Contour-Film[®] gearbeitet (Kimmel, H., Opitz H., Siemens-Z. 46 1972 Nr. 12 S. 959-961). Hierzu wird eine auf der angeströmten Oberfläche aufgebrachte gleichmäßig befeuchtete Photogelatineschicht durch die darüberströmende trockene Luft infolge Verdunstung in einen dem örtlichen stationären Grenzschichtströmungszustand entsprechenden örtlich verschiedenen Trocknungsgrad übergeführt.

Aus den in der Photogelatineschicht nach der Beströmung örtlich unterschiedlich verteilten Restflüssigkeitsmengen läßt sich nun ein photographisches Halbtonphotogramm entwickeln, dessen Schwärzungsverteilung die Restfeuchteverteilung in der Photogelatineschicht aufgrund der Existenz einer Feuchte-Schwärzungs-Kurve wiedergibt. Da die verdunsteten Flüssigkeitsmengen aufgrund der oben erwähnten Analogie zwischen Stoff- und Wärmeübergang ein Maß für letzteren darstellen, läßt sich einer bestimmten örtlichen photographischen Dichte auf dem Photogramm ein bestimmter örtlicher Wärmeübergangskoeffizient zuordnen. Eine absolute Bestimmung der Zahlenwerte ist mit diesem Verfahren bisher noch nicht möglich. Es muß noch mit physikalisch ermittelten Werten geeicht werden. Das auf obigem Wege erhaltene Halbtonphotogramm einer Testflachbaugruppe gibt die stationäre Stoffübergangsverteilung wieder, wie sie — durch die stationäre Dickenverteilung der Prandtl'schen Grenzschicht gesteuert durch Verdunstung — entstanden ist. Die « Äquidensiten » lassen sich aus Halbtonphotogrammen darstellen.

« Äquidensiten » sind Flächen oder Linien gleicher, willkürlich wählbarer Schwärzungsbereiche, die jeweils schwarz auf weiß oder umgekehrt dargestellt werden. Gibt man diesen « Äquidensiten » bestimmte Farben, so wird die Zuordnung der Äquidensiten untereinander bei komplizierten Verhältnissen wesentlich erleichtert. Die mit Hilfe der Naßfilmtechnik erhältlichen Äquidensiten sind Linien (Flächen) gleicher Restfeuchte, sogen. « Isohumiden ».

Die Herstellung der Äquidensiten erfolgt mit Hilfe des sogen. Contourfilms[®] (Agfa). Durch Veränderung der Belichtungszeit kann man das « Fenster » im Contourfilm über den gesamten Dichtebereich der Halbtonvorlage verschieben.

Man erhält so je nach Dichteabstufung (kontrollierbar durch Mitkopieren eines Stufengraukeiles) mehrere transparente Äquidensiten-Auszüge, die passend übereinandergelegt (Sandwich-Montage) gemeinsam kopiert werden können. Durch chromogene Entwicklung der schwarzweiß-Auszüge kann man Farbäquidensiten als Diapositive erhalten.

Die Herstellung der Äquidensiten nach diesem Verfahren ist zeitraubend und an die Verwendung von Agfa-Contour-Film[®] gebunden.

Nach einem bekannten Verfahren (französische Patentschrift 2 145 310) wird zum Sichtbarmachen von stationären Strömungszuständen von Gasen auf photochemischem Wege auf die angeströmte Fläche eine Photogelatineschicht aufgebracht und diese durch Überleiten eines inerten Gases in einen dem Strömungszustand entsprechenden örtlich verschiedenen Trockenheitsgrad übergeführt. Das so erhaltene Trockenprofil wird durch Überleiten eines photochemischen reaktiven Gases in ein latentes photographisches Bild übergeführt, das dann entwickelt wird.

Aufgabe der Erfindung ist die bildmäßige Darstellung von stationären Wärmeübergangskoeffizientenfeldern in Form von Äquidensiten, wobei die angeführten Mängel nicht auftreten.

Diese Aufgabe wird nach der Erfindung dadurch gelöst, das die Beströmung im Hellen durchgeführt wird, der abgezogene photographische Film im Dunkeln auf einen unbelichteten, trockenen photographischen Film abgequetscht, nach einer angemessenen Verweilzeit wieder abgetrennt, die erhaltene Naßkopie mit einem reaktiven Gas bekeimt und in einem photographischen Entwickler zu einem Naßkopiephotogramm entwickelt wird. Die Herstellung der Naßkopie-Photogramme ist schnell, da das erfindungsgemäße Verfahren sofort Linienäquidensiten liefert. Von besonderem Vorteil ist weiterhin, daß im Sequenzverfahren durch abgestufte Beströmungszeiten abgestufte Feuchteprofile erhalten werden können, deren einzelne Isohumiden zu Isohumidenscharen übereinandergeschichtet werden können. Die Darstellung wird dann noch anschaulicher, wenn die Ränder für die Wärmeübergangsbereiche — Isohumiden — durch farbige Linien dargestellt werden. Das erfindungsgemäße Verfahren ermöglicht auch noch sehr kleine Unterschiede an Wärmeübergangsbereichen zu erfassen. Es sind Aussagen in bezug auf die relative Abfolge der Wärmeübergangsbereiche und halbquantitative Aussagen über die Wärmeübergangskoeffizienten möglich.

Zum Anquellen des photographischen Films hat sich entweder Wasser oder ein Gemisch aus Wasser und Glykol als geeignet erwiesen. Besonders vorteilhaft ist ein Volumenverhältnis von 10 : 1.

Geeignete reaktive Gase sind schwefelhaltige Gase, insbesondere Schwefelwasserstoff.

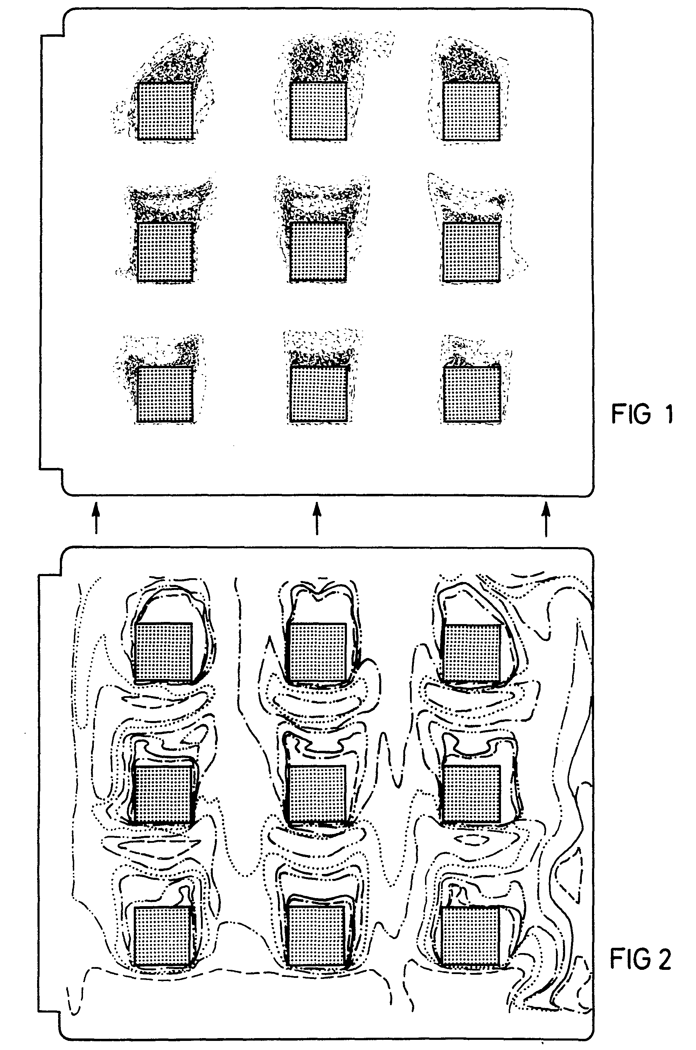

Zur Durchführung des Verfahrens kann man ein bereits im Luftstrom exponiertes, aber unentwickeltes Naßfilmphotogramm mit der Schichtseite auf einen unbelichteten trockenen Film mittels Kalander oder Presse abdrücken und beide Filme nach 30 Sekunden Verweilzeit trennen. Hierbei geht ein Teil des Restfeuchte-Profils des Original-Naß-Films durch Diffusion in die Photogelatineschicht des zunächst trockenen Films (Naßkopie) über. Wird nun die Naßkopie « bekeimt », vorzugsweise mit $H_2S$-Gas, so daß nur ein latentes Bild der übergegangenen Restfeuchte erzielt wird, so kann nach üblichem photographischen Entwickeln und Fixieren ein Schwarz-Weiß-Bild auf der Naßkopie erhalten werden, das eine auffallende Änderung der Dichteverteilung gegenüber dem entwickelten Naßfilm-Original aufweist. Dichten unterhalb von 0,3 werden unterdrückt und nicht mehr dargestellt, der Film wird in diesen Bereichen völlig transparent, während das entwickelte Naßfilm-Original in allen Bereichen eine feuchtigkeitsanaloge Dichteverteilung wiedergibt. Die Naßkopie wirkt wie ein Diskriminator. Außerdem ist die erhaltene transparente Trockenzone gegen die restlich verbliebenen Halbtongebiete höherer Dichten mit einer wesentlich dichteren, aber sehr schmalen scharfen Kontur abgegrenzt. Die « Isohumiden-Kontur » stellt einen geschlossenen Linienzug um die transparenten Trockenzonen dar. (Fig. 1).

In analoger Weise können mit den höchsten Feuchten beginnend bis zu kleinen Restfeuchten, die der Dichte ~0,3 des Naßfilms entspricht, die entsprechenden Naßkopien hergestellt werden. Die entwickelten Naßkopien können einzeln entlang der Isohumidenkontur auf transparente Zeichenfolien mit Tusche abgepaust werden. Die einzelnen Schwarz-Weiß-Linien-Pausen können anschließend mit dem Farbkopierverfahren (Agfa « Transparex® » 3M-Colorkey, Reguprint u.a.) in farbige Konturen umgewandelt werden, wobei zahlreiche Farben wählbar sind. Die Farbfolien-Kopien ergeben passend übereinandergelegt ein mehrfarbiges transparentes « Isohumiden-Sandwich ».

Ein Isohumiden-Sandwich, bei dem mehrere transparente farbige Isohumidenkonturen übereinandergeschichtet sind, gibt den geometrischen Verlauf der Wärmeübergangsbereiche sowie deren quantitative Abfolge wieder.

Mit der nach dem erfindungsgemäßen Verfahren erhaltenen Isohumidenschar gelingt es durch Zuordnung eines Wärmeübergangskoeffizienten mit Hilfe einer Eichung die anderen physikalischen Werte zu ermitteln.

So schlüsseln farbige Linienisohumiden (Fig. 2) die Verteilung der Wärmeübergangsbereiche kartographisch auf. Die Farbfolge der Linien im Sinne niedriger zu höheren Wärmeübergangszahlen stellt sich damit in relativer Angabe wie folgt dar :

--.-- (schwarz) $= 1,0\ \alpha_0$
- (violett) $= 1,3.\alpha_0$
-...- (gelb) $= 1,7.\alpha_0$
-.- (orange) $= 2,2.\alpha_0$
... (rot) $= 2,9\ \alpha_0$
-..- (grün) $= 3,8.\alpha_0$
-- (blau) $= 5,0.\alpha_0$

Nach dem erfindungsgemäßen Verfahren können die stationären Wärmeübergangskoeffizientenfelder von Wärmetauschern, u.a. mit Gasen zwangsgekühlten Systemen ermittelt werden.

Die Erfindung wird durch die folgenden Beispiele näher erläutert.

Beispiel 1

Ein photographischer Film (Agfa 023) wird in einem Wasser-Glykol-Gemisch (10 : 1) 3 Minuten lang bei einer Temperatur von 10 °C bei Tageslicht gequollen. Überstehende Flüssigkeitsreste auf dem Film werden durch Abquetschen entfernt. In diesem Zustand wird der Film zur Exposition auf die zu beströmende Oberfläche eines Gegenstandes angebracht.

Nach einer Expositionszeit im vorgesehenen stationären Luftstrom von mehreren Sekunden wird der Film von der Oberfläche entfernt und im Dunkeln auf einen unbelichteten trockenen Film aufgequetscht. Nach einer Verweilzeit von 30 Sekunden hat sich die auf dem angequollenen Film ursprünglich vorhandene charakteristische unsichtbare Restfeuchteverteilung auf beiden Filmen gleichgewichtsmäßig verteilt.

Das nun auf der Kopie befindliche Restfeuchteprofil wird mit $H_2S$-Gas bekeimt und nachfolgend mit einem normalen photographischen Entwickler zu einem Schwarz-Weiß-Film verarbeitet.

Dieses Naßkopiephotogramm zeigt gegenüber einem Restfeuchteprofil, hergestellt nach DE-PS 2.133.834 und entwickelt mit $H_2S$ zu einem sichtbaren Photogramm der Restfeuchteverteilung eine veränderte Struktur. Es sind alle photographischen Dichten unter 0,3 unterdrückt. Außerdem ist die Naßkopie, hergestellt nach dem erfindungsgemäßen Verfahren, von einer scharfen Kontur, der sogen. Isohumidenkontur (Fig. 1) umgeben.

Beispiel 2

Bei gleichen Versuchsbedingungen wird mit Methylmercaptan als reaktives Gas gearbeitet.

**Ansprüche**

1. Verfahren zum Sichtbarmachen von stationären Wärmeübergangskoeffizientenfeldern, bei dem auf die Oberfläche eines zu untersuchenden Gegenstandes ein angequollener photographischer Film aufgebracht, mit einem Gas beströmt und wieder abgezogen wird, wonach mit einem photographischen Entwickler ein Photogramm entwickelt wird, dadurch gekennzeichnet, daß die Beströmung im Hellen durchgeführt wird, der abgezogene photographische Film im Dunkeln auf einen unbelichteten, trockenen photographischen Film abgequetscht, nach einer angemessenen Verweilzeit wieder abgetrennt, die erhaltene Naßkopie mit einem reaktiven Gas bekeimt und in einem photographischen Entwickler zu einem Naßkopiephotogramm entwickelt wird.

2. Verfahren nach Anspruch 1, dadurch gekennzeichnet, daß der photographische Film mit Wasser oder einem Gemisch aus Wasser und Glykol im Volumenverhältnis 10 : 1 angequollen wird.

3. Verfahren nach Anspruch 1 und 2, dadurch gekennzeichnet, daß die Verweilzeit 30 Sekunden beträgt.

4. Verfahren nach Anspruch 1 bis 3, dadurch gekennzeichnet, daß als reaktives Gas Schwefelwasserstoffgas verwendet wird.

5. Verfahren zum Sichtbarmachen von mehreren Isohumiden einer mit einem Gas angeströmten Fläche, bei dem nach dem Verfahren gemäß den Ansprüchen 1-4 mehrere auf unterschiedliche Feuchteprofile der Fläche beruhende Naßkopiephotogramme hergestellt, die auf den Naßkopiephotogrammen sichtbaren Konturen auf transparente Aufzeichnungsmaterialien übertragen, nach einem beliebigen Farbkopierverfahren in farbige Konturen umgewandelt und die einzelnen Aufzeichnungsmaterialien zur Betrachtung aufeinandergelegt werden.

## Claims

1. A process for rendering visible stationary heat transfer coefficient fields, in which a swollen photographic film is applied to the surface of an object to be tested, a gas is caused to flow over the film and the film is removed again, whereafter a photogram is developed by means of a photographic developer, characterised in that the gas flow over the film is effected in the light, the removed photographic film is pressed against an unexposed, dry photographic film in the dark and is withdrawn after an adequate dwell time, and that the wet copy obtained is seeded with a reactive gas and developed to a wet copy photogram in a photographic developer.

2. A process according to Claim 1, characterised in that the photographic film is swollen by water, or a mixture of water and glycol in a ratio by volume of 10 : 1.

3. A process according to Claims 1 and 2, characterised in that the dwell time is 30 seconds.

4. A process according to Claims 1 to 3, characterised in that hydrogen sulphide gas is used as reactive gas.

5. A process for rendering visible a plurality of isohumids of a surface over which gas flows, in which in accordance with the process as claimed in Claims 1 to 4, a plurality of wet copy photograms based on different moisture profiles of the surface are produced and the contours which appear on the wet copy photograms are transferred onto transparent recording materials and changed into coloured contours in accordance with a random colour printing process, and in which the individual recording materials are superposed for viewing.

## Revendications

1. Procédé pour rendre visibles des champs stationnaires de coefficients de transfert de chaleur, dans lequel un film photographique gonflé est déposé sur la surface d'un objet à étudier, balayé par un gaz et retiré, après quoi un photogramme est développé à l'aide d'un révélateur photographique, caractérisé par le fait que le balayage est effectué à la lumière, le film photographique retiré est écrasé dans l'obscurité sur un film photographique sec vierge et enlevé de nouveau après un temps de séjour approprié, la copie humide obtenue est ensemencée avec un gaz réactif et développée dans un révélateur photographique pour obtenir un photogramme de copie humide.

2. Procédé suivant la revendication 1, caractérisé par le fait que le film photographique est gonflé avec de l'eau ou un mélange d'eau et de glycol dans le rapport volumique 10 : 1.

3. Procédé suivant l'une des revendications 1 ou 2, caractérisé par le fait que la durée de séjour est égale à 30 secondes.

4. Procédé suivant l'une des revendications 1 à 3, caractérisé par le fait qu'on utilise de l'acide sulfhydrique en tant que gaz réactif.

5. Procédé pour rendre visibles plusieurs isohumides d'une surface balayée par un gaz, dans lequel plusieurs photogrammes de copies humides reposant sur différents profils d'humidité de la surface sont réalisés suivant le procédé des revendications 1 à 4, les contours visibles sur les photogrammes de copies humides sont transférés sur des matériaux à dessin transparents, sont transformés en contours colorés suivant n'importe quel procédé de reproduction en couleurs, et les matériaux à dessins individuels sont superposés pour être observés.

0 017 752

FIG 1

FIG 2